# EUROPEAN PATENT APPLICATION

(11) **EP 3 725 204 A1**
(43) Date of publication of application: **21.10.2020**
(21) Application number: 18888602.2
(22) Date of filing: 10.12.2018
(51) Int. Cl.: A47L 9/28, A47L 9/30, G05D 1/02, G06T 7/593

(54) **ELECTRIC CLEANER**

(30) Priority: 15.12.2017 JP 2017240934
(71) Applicant: Toshiba Lifestyle Products & Services Corporation, Kawasaki-shi, Kanagawa 210-0007 (JP)
(72) Inventor: IZAWA Hirokazu, Kawasaki-shi, Kanagawa 210-0007 (JP); MARUTANI Yuuki, Kawasaki-shi, Kanagawa 210-0007 (JP); WATANABE Kota, Kawasaki-shi, Kanagawa 210-0007 (JP); FURUTA Kazuhiro, Kawasaki-shi, Kanagawa 210-0007 (JP)
(74) Representative: Haseltine Lake Kempner LLP
(86) International application number: PCT/JP2018/045284
(87) International publication number: WO 2019/117078

(57) **Abstract**

Provided is a smaller-sized vacuum cleaner (11) capable of controlling traveling with high precision.

A vacuum cleaner (11) has a main casing capable of traveling, a traveling/sensor type CPU (61) configured to control traveling of the main casing, a plurality of cameras (51) mounted on the main casing, and an image processor (63) having the functions of image input means, image processing means, self-position estimation means, and map generation means. The image processor (63) acquires image data from at least two cameras out of the plurality of cameras (51). The image processor (63) performs image processing to the acquired image data. The image processor (63) estimates a self-position on the basis of the image data subjected to the image processing. The image processor (63) generates a map of a traveling area where the main casing travels, on the basis of the image data subjected to the image processing.

## Description

### TECHNICAL FIELD

Embodiments described herein relate generally to a vacuum cleaner configured to estimate a self-position and further generate a map of a traveling area where a main body travels.

### BACKGROUND ART

Conventionally, a so-called autonomously-traveling type cleaning robot has been known, which cleans a floor surface as a cleaning-object surface while autonomously traveling on the floor surface.

Such a vacuum cleaner uses, for example, SLAM (simultaneous localization and mapping) technique to generate a map reflecting the size and shape of a room to be cleaned, an obstacle and the like, and to set a traveling route on the basis of the map.

A known vacuum cleaner is configured to use a laser sensor or a gyro sensor to realize the SLAM technique. However, in the case of a vacuum cleaner equipped with a laser sensor, since a laser sensor is large in size, a downsized vacuum cleaner is not easily realized. Thus, in some cases, the vacuum cleaner is not able to enter or clean an area with a limited height, for example, a clearance under a bed or a sofa. Moreover, since a laser sensor is expensive, an inexpensive vacuum cleaner is not able to be produced. In the case of a vacuum cleaner equipped with a gyro sensor, the moving amount of the vacuum cleaner needs to be calculated by use of the gyro sensor, and an error in the calculation is large. Thus, the precision of the calculation is not easily improved.

### CITATION LIST

### Patent Literature

PTL 1: Japanese Laid-open Patent Publication No. 2011-233149

### SUMMARY OF INVENTION

### Technical Problem

The technical problem to be solved by the present invention is to provide a smaller-sized vacuum cleaner capable of controlling traveling with high precision.

### Solution to Problem

The vacuum cleaner according to the present embodiment has a main body capable of traveling, travel control means configured to control traveling of the main body, a plurality of cameras mounted on the main body, image input means, image processing means, self-position estimation means, and map generation means. The image input means acquires image data from at least two cameras out of the plurality of cameras. The image processing means performs image processing to the image data acquired by the image input means. The self-position estimation means estimates a self-position on the basis of the image data subjected to the image processing by the image processing means. The map generation means generates a map of a traveling area where the main body travels, on the basis of the image data subjected to the image processing by the image processing means.

### BRIEF DESCRIPTION OF DRAWINGS

[Fig. 1]

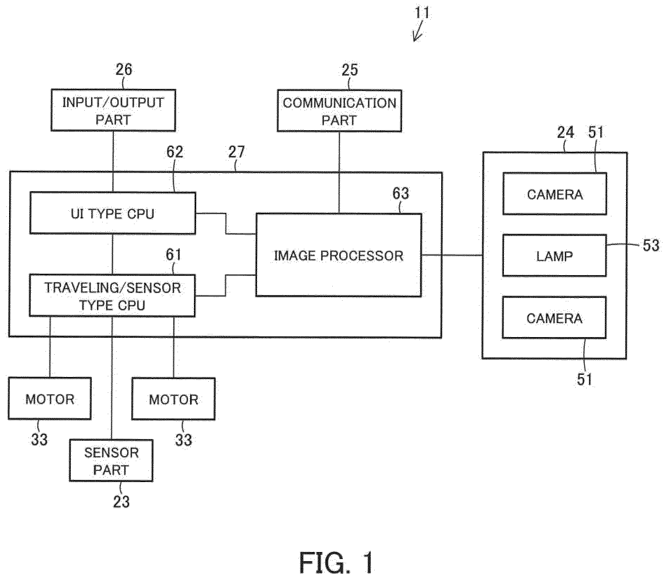

   Fig. 1 is a block diagram illustrating an internal structure of a vacuum cleaner according to one embodiment.
[Fig. 2]

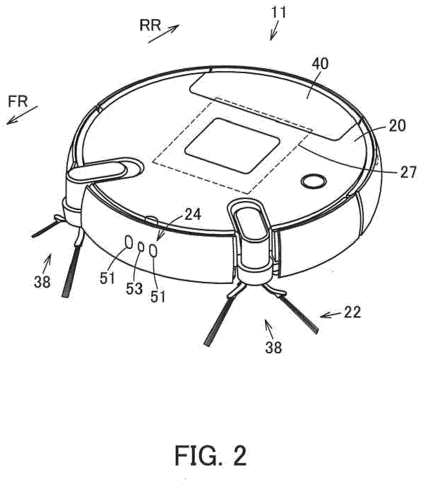

   Fig. 2 is an oblique view illustrating the above vacuum cleaner.
[Fig. 3]

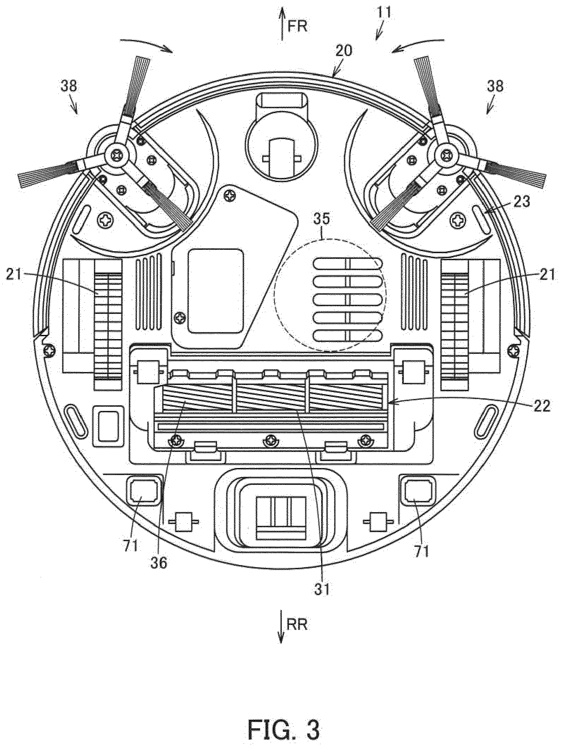

   Fig. 3 is a plan view illustrating the above vacuum cleaner as viewed from below.
[Fig. 4]

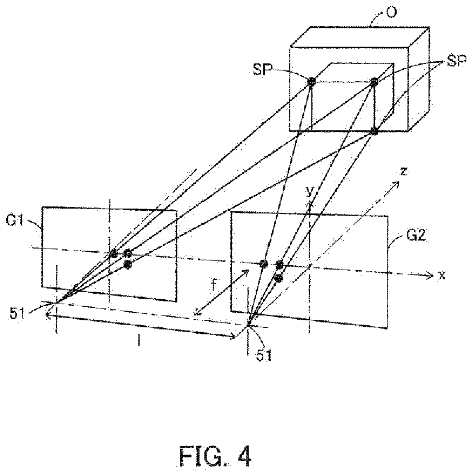

   Fig. 4 is an explanatory view schematically illustrating the method of calculating a distance to an object by the above vacuum cleaner.
[Fig. 5]

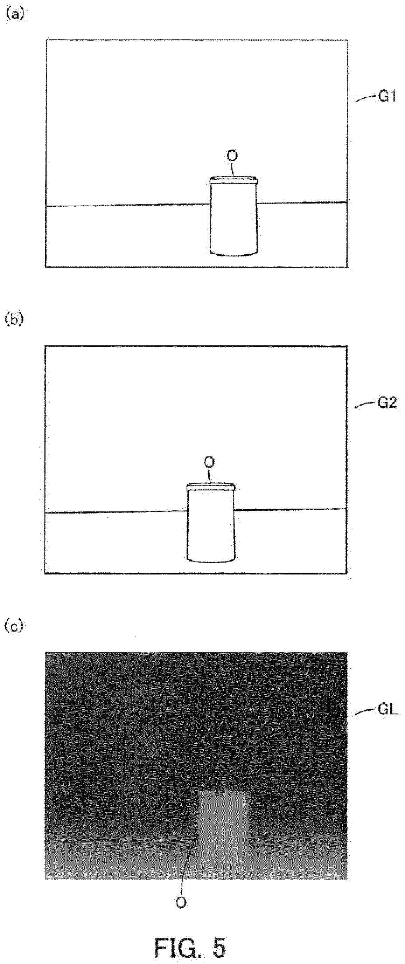

   Fig. 5(a) is an explanatory view schematically illustrating one example of the image captured by one camera; Fig. 5(b) is an explanatory view schematically illustrating one example of the image captured by the other camera; and Fig. 5(c) is an explanatory view illustrating one example of a distance image based on the images of Fig. 5(a) and Fig. 5(b).
[Fig. 6]

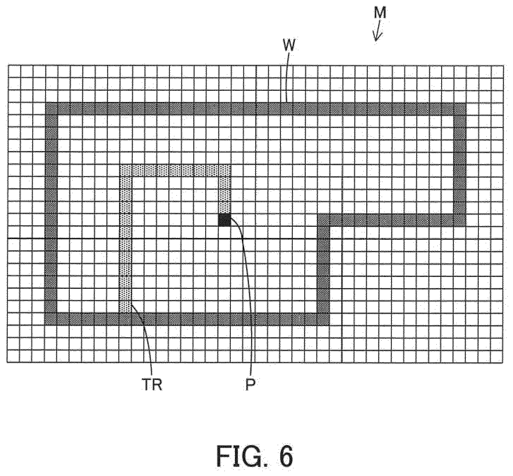

   Fig. 6 is an explanatory view illustrating one example of the map generated by map generation means of the above vacuum cleaner.
[Fig. 7]

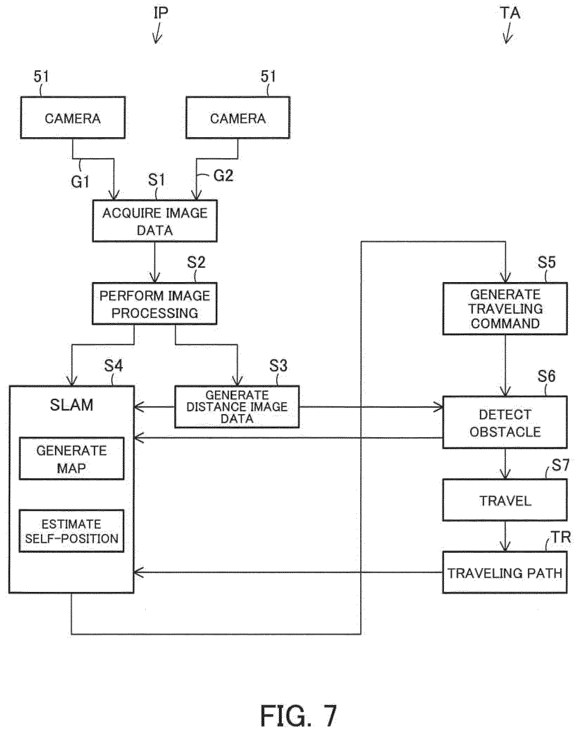

   Fig. 7 is an explanatory processing flowchart of the above vacuum cleaner.

### DESCRIPTION OF EMBODIMENT

The configuration of the one embodiment will be described below with reference to the drawings.

In Fig. 1 to Fig. 3, reference sign 11 denotes a vacuum cleaner as an autonomous traveler. The vacuum cleaner 11 constitutes a vacuum cleaning system, which is a vacuum cleaning apparatus serving as an autonomous traveler device, in combination with a charging device serving as a station device. In the present embodiment, the vacuum cleaner 11 is a so-called self-propelled robot cleaner, which cleans a floor surface serving as a traveling surface that is a cleaning-object part, while autonomously traveling on the floor surface. It is noted that the examples of the self-propelled vacuum cleaner 11 include not only a completely autonomous traveler but also a self-propelled device by being remotely controlled by an external device such as a remote control.

The vacuum cleaner 11 includes a main casing 20 which is a main body. The vacuum cleaner 11 further includes driving wheels 21 which are travel driving parts. The vacuum cleaner 11 further includes a cleaning unit 22 configured to remove dust and dirt from the floor surface. The vacuum cleaner 11 further includes a sensor part 23. The vacuum cleaner 11 further includes an image capturing part 24. The vacuum cleaner 11 may further include a communication part 25. The vacuum cleaner 11 may further include an input/output part 26 configured to exchange signals with an external device and/or a user. The vacuum cleaner 11 further includes a control unit 27 serving as control means which is a controller. The vacuum cleaner 11 may further include a display part configured to display an image. The vacuum cleaner 11 may further include a battery for power supply serving as a power source. It is noted that a direction extending along the traveling direction of the main casing 20, as illustrated by an arrow FR and an arrow RR in Fig. 2, is treated as a back-and-forth direction. The following description will be given on the basis that a left-and-right direction or a direction toward both sides intersecting the back-and-forth direction is treated as a widthwise direction.

The main casing 20 is formed of, for example, synthetic resin. The main casing 20 is formed in a shape allowing to house various types of devices and components. The main casing 20 may be formed in, for example, a flat column or a disk shape. The main casing 20 may have a suction port 31 which is a dust-collecting port or the like, in the lower part facing a floor surface or other part.

The driving wheels 21 are configured to make the main casing 20 autonomously travel on a floor surface in the advancing direction and the retreating direction, that is, serve for traveling use. In the present embodiment, the driving wheels 21 are disposed in a pair, for example, on the left and right sides of the main casing 20. The driving wheels 21 are driven by motors 33 serving as driving means. It is noted that a crawler or the like may be used as a travel driving part, instead of these driving wheels 21.

The motors 33 are disposed so as to correspond to the driving wheels 21. Accordingly, in the present embodiment, the motors 33 are disposed in a pair, for example, on the left and right sides. The motors 33 are capable of independently and respectively driving the driving wheels 21.

The cleaning unit 22 is configured to remove dust and dirt existing from, for example, a floor surface. The cleaning unit 22 has the function of collecting and catching dust and dirt existing on, for example, a floor surface through the suction port 31, and/or wiping a floor surface and the like. The cleaning unit 22 may include at least one of an electric blower 35 configured to suck dust and dirt together with air through the suction port 31, a rotary brush 36 serving as a rotary cleaner rotatably attached to the suction port 31 to scrape up dust and dirt and a brush motor configured to make the rotary brush 36 rotationally drive, side brushes 38 which are auxiliary cleaning means serving as turning-cleaning parts rotatably attached on the peripheral edge part of the main casing 20 to scrape up dust and dirt and side brush motors configured to make the side brushes 38 drive. The cleaning unit 22 may further include a dust-collecting unit 40 which communicates with the suction port 31 to accumulate dust and dirt.

The sensor part 23 is configured to sense various types of information for supporting the traveling of the main casing 20. The sensor part 23 according to the present embodiment is configured to sense, for example, pits and bumps of a floor surface, that is, step gaps, a wall or an obstacle corresponding to a traveling obstacle for the vacuum cleaner 11, and an amount of dust and dirt existing on a floor surface. The sensor part 23 may include, for example, an infrared sensor or an ultrasonic sensor serving as obstacle detection means, and/or a dust-and-dirt amount sensor configured to detect an amount of the dust and dirt sucked through the suction port 31 into the dust-collecting unit 40. In an example, an infrared sensor or an ultrasonic sensor may include the function of a distance measurement part serving as distance measurement means configured to measure a distance between the side part of the main casing 20 and an object corresponding to an obstacle.

The image capturing part 24 includes a camera 51 serving as an image-pickup-part main body which is image capturing means. The image capturing part 24 may include a lamp 53 serving as an illumination part which is illumination means. The lamp 53 is a detection assisting part serving as detection assisting means.

The camera 51 is a digital camera which is directed to the forward direction corresponding to the traveling direction of the main casing 20, and which is configured to capture a digital image or moving video at a specified horizontal view angle, for example, 105 degrees, to the direction parallel to the floor surface on which the main casing 20 is mounted. The camera 51 includes a lens, a diaphragm, a shutter, an image pickup element such as a CCD, a camera control circuit and the like. A plurality of the cameras 51 are disposed. In the present embodiment, the cameras 51 are disposed in a pair apart from each other on the left and right sides, as an example. The cameras 51, 51 have image ranges or fields of view overlapping with each other. Accordingly, the imaging areas of the images captured by the cameras 51, 51 overlap with each other in the left-and-right direction. It is noted that the camera 51 may capture a color image or a black/white image in a visible light wavelength region, or may capture an infrared image, as an example.

The lamp 53 is configured to irradiate area in the capturing direction of the camera 51, to provide brightness required for image capturing. The lamp 53 according to the present embodiment is configured to emit light in the wavelength region which corresponds to the wavelength region of light allowed to be captured by the camera 51. Also, in the case where the camera 51 is capable of capturing an image in a visible light wavelength region, the lamp 53 according to the present embodiment emits light in the visible light wavelength region. In the case where the camera 51 is capable of capturing an image in an infrared wavelength region, the lamp 53 emits light in the infrared wavelength region. The lamp 53 is disposed so as to correspond to each of the cameras 51. In the present embodiment, the lamp 53 is disposed between the cameras 51, 51, or may be disposed for each camera 51. For example, an LED light serves as the lamp 53. The lamp 53 is not an essential component.

The communication part 25 includes a wireless LAN device and the like, which serves as a wireless communication part corresponding to wireless communication means configured to perform wireless communication with an external device via a home gateway which is a relay point serving as relaying means and a network such as the internet, and as a cleaner signal receiving part corresponding to cleaner signal receiving means. In an example, the communication part 25 may include an access point function, so as to perform wireless communication directly with an external device without a home gateway. In an example, the communication part 25 may additionally include a web server function.

The input/output part 26 is configured to acquire a control command transmitted by an external device such as a remote control, and/or a control command input through input means such as a switch or a touch panel disposed on the main casing 20, and also to transmit a signal to, for example, a charging device.

A microcomputer serves as the control unit 27, and the microcomputer includes, for example, a CPU which is a control unit main body serving as a control means main body, a ROM, a RAM and the like. The control unit 27 is electrically connected to the cleaning unit 22, the sensor part 23, the image capturing part 24, the communication part 25, the input/output part 26 and the like. The control unit 27 according to the present embodiment includes a traveling/sensor type CPU 61 serving as a first control unit. The control unit 27 further includes a user interface type CPU 62 serving as a second control unit. Hereinafter, the user interface type CPU is referred to as the UI type CPU 62. The control unit 27 further includes an image processor 63 serving as a third control unit. The control unit 27 further includes a cleaning control part which is cleaning control means. The control unit 27 further includes a memory serving as a storage section which is storage means. The control unit 27 is electrically connected to the battery. The control unit 27 may further include a charging control part configured to control the charging of the battery.

The traveling/sensor type CPU 61 is electrically connected to the motors 33. The traveling/sensor type CPU 61 is electrically connected further to the sensor part 23. The traveling/sensor type CPU 61 is electrically connected further to the UI type CPU 62. The traveling/sensor type CPU 61 is electrically connected further to the image processor 63. The traveling/sensor type CPU 61 has, for example, the function of the travel control part serving as travel control means configured to control the driving of the driving wheels 21, by controlling the driving of the motors 33. The traveling/sensor type CPU 61 further has the function of the sensor control part serving as the sensor control means configured to acquire the detection result by the sensor part 23. The traveling/sensor type CPU 61 has the traveling mode which includes the steps of setting a traveling route on the basis of the map data indicating the traveling area corresponding to the area allowing the located vacuum cleaner 11 to travel and the detection by the sensor part 23, and controlling the driving of the motors 33, thereby making the main casing 20 autonomously travel in the traveling area along the traveling route. The traveling route set by the traveling/sensor type CPU 61 allows efficient traveling and cleaning, such as a route allowing the main casing 20 to travel with the shortest traveling distance in an area allowing the traveling, that is, an area allowing the cleaning in the present embodiment, excluding the area where the traveling is hindered in the map data due to an obstacle, a step gap or the like, for example, a route where the main casing 20 travels straight as long as possible, a route where directional change is least required, a route where contact with an object as an obstacle is less, or a route where the number of times of redundantly traveling at the same point is the minimum. In the present embodiment, the area in which the vacuum cleaner 11 is allowed to travel substantially corresponds to the area to be cleaned by the cleaning unit 22, and thus the traveling area is identical to the area to be cleaned.

The UI type CPU 62 is configured to acquire the signal received by the input/output part 26, and generate a signal to be output by the input/output part 26. The UI type CPU 62 is electrically connected to the input/output part 26. The UI type CPU 62 is electrically connected further to the traveling/sensor type CPU 61. The UI type CPU 62 is electrically connected further to the image processor 63.

The image processor 63 is electrically connected to each camera 51 and the lamp 53 of the image capturing part 24. The image processor 63 is electrically connected further to the communication part 25. The image processor 63 is electrically connected further to each of the CPUs 61, 62. The image processor 63 is configured to perform various types of processing by acquiring image data captured by at least two cameras 51, 51. The image processor 63 has the function of the image input part serving as image input means configured to acquire image data from at least two cameras 51, 51. Also, the image processor 63 according to the present embodiment has the function of the image processing part serving as image processing means configured to perform image processing to the acquired at least two pieces of image data. The image processor 63 further has the function of the self-position estimation part serving as self-position estimation means configured to estimate the self-position on the basis of the image data subjected to the image processing. The image processor 63 further has the function of the map generation part serving as map generation means configured to generate a map of the traveling area in which the main casing 20 travels, on the basis of the image data subjected to the image processing.

The outline of the technique to detect a distance from the cameras 51, 51 to an object existing in the vicinity is described with reference to Fig. 4. Firstly, a plurality of feature points SP of an object O subjected to distance detection, such as corners uniquely allowing position determination, are detected in a captured image G1 captured by one of the two cameras 51, 51 disposed in a pair right and left. If an imaging coordinate plane is set away by a focal distance f from the camera 51 having captured the captured image G1, the feature points SP of the object O shall exist on the extended lines respectively connecting the center of the camera 51 and feature points on the imaging coordinate plane, in a three-dimensional coordinate space. Similarly, in a captured image G2 captured by the other of the two cameras 51, 51, the feature points SP of the object O shall exist also on the extended lines respectively connecting feature points on the targeted imaging coordinate plane. Accordingly, the coordinates of the feature points SP of the object O in the three-dimensional coordinate space are enabled to be uniquely determined as the positions each at which the extended lines respectively passing through the two imaging coordinate planes intersect. Moreover, the distances from the cameras 51, 51 to the feature points SP of the object O in the actual space are enabled to be acquired on the basis of a distance 1 between the two cameras 51, 51. Such processing for the entire image range enables to acquire the distance image or the parallax image generated on the basis of the captured images with information on distances from the cameras to objects in the vicinity.

Fig. 5(c) shows an example of a distance image GL generated on the basis of the captured image G1 captured by one camera 51 shown in Fig. 5(a) and the captured image G2 captured by the other camera 51 shown in Fig. 5(b). In the distance image GL shown in Fig. 5 (c), a part in higher lightness, that is, a whiter part on a paper surface, indicates a shorter distance from the cameras 51. In an example, the distance image GL has a white lower part in the entire width, wherein a lower in height is whiter, and thus a distance from the cameras 51 is shorter. Accordingly, the lower part is determined as the floor surface on which the vacuum cleaner 11 is placed. A predetermined shape entirely in similar whiteness in the distance image GL is able to be detected as one object, and corresponds to the object O in the example shown in the figure. As described above, the distance from the cameras 51, 51 to the object O has been acquired, and thus the actual width and height of the object O are also able to be acquired on the basis of the width and height in the distance image GL. Taking into consideration not only such information but also the imaging direction by the cameras 51, 51 and the advancing directions of the vacuum cleaner 11, whether or not the object O becomes an obstacle interfering with the traveling of the vacuum cleaner 11 is enabled to be determined. That is, the image processor 63 may have the function of the depth calculation part serving as depth calculation means configured to generate distance image data through calculation of the depth of an object in the image data.

In an example, the image processor 63 according to the present embodiment may have the function of comparing a distance to an object captured by the cameras 51, 51 in a predetermined range of image, such as the range of image set so as to correspond to the width and height of the main casing 20, with a set distance which is a threshold value previously set or variably set, thereby determining that the object positioned at a distance identical to or shorter than the set distance is an obstacle. Accordingly, the image processor 63 may have the function of the obstacle determination part serving as obstacle determination means configured to determine whether or not the object subjected to the calculation of the distance from the main casing 20 based on the image data captured by the cameras 51, 51 is an obstacle.

The image processor 63 further estimates the self-position of the vacuum cleaner 11 in the traveling area on the basis of a detected shape in the vicinity of the main casing 20, for example, the distance and height of an object which will become an obstacle. The image processor 63 according to the present embodiment estimates the self-position of the vacuum cleaner 11 in the traveling area, on the basis of the three-dimensional coordinates of the feature points of an object in the image data captured by the cameras 51, 51. Accordingly, the image processor 63 is capable of estimating the self-position on the basis of the data of a predetermined distance range in the distance image data.

Furthermore, the image processor 63 is configured to generate the map data indicating the traveling area allowing the traveling, on the basis of a shape in the vicinity of the main casing 20 detected on the basis of the image data captured by the cameras 51, 51, for example, the distance and height of an object which will become an obstacle. The image processor 63 according to the present embodiment generates the map indicating the positional relation and height of an obstacle and the like which is an object positioned in the traveling area, on the basis of the three-dimensional coordinates of the feature points of the object in the image data captured by the cameras 51, 51. The image processor 63 according to the present embodiment generates the map data reflecting the shape, positional relation and height of an obstacle which is an object. Accordingly, the image processor 63 is capable of generating the map of the traveling area on the basis of data of a predetermined distance range in the distance image data. The map data is generated on a predetermined coordinate system, for example, a rectangular coordinate system. The map data according to the present embodiment is generated so that the meshes set on the basis of the predetermined coordinate system are used as base units. As in one example shown in Fig. 6, a map data M is able to reflect not only the shape of an outer wall W, which is an obstacle or a wall, for example, furniture surrounding a traveling area, but also a traveling path TR of the vacuum cleaner 11, and a current position P. The map data generated by the image processor 63 is able to be stored in the memory. It is noted that the image processor 63 is capable of appropriately correcting the map data, in the case where a detected shape or position in the vicinity is not identical to the shape or the position of an obstacle or the like in the already generated map data.

Additionally, the image processor 63 may have the function of the image correction part serving as image correction means configured to perform primary image processing to, for example, the original image data captured by the cameras 51, 51, such as correction of distortion of the lenses of the cameras 51, 51, noise cancellation, contrast adjusting, and matching the centers of images. The contrast adjusting by the image processor 63 can be performed separately from the contrast adjusting function included in, for example, the camera 51 itself. The frame rate at which the image processor 63 performs the image processing may be set lower than the frame rate at which the image data is acquired from the cameras 51, 51. The image data to be processed by the image processor 63 may have a smaller number of pixels than that of the image data captured by and acquired from the cameras 51, 51. That is, the image processor 63 is capable of performing processing such as of reducing the number of pixels of the image data captured by the cameras 51, 51 to generate coarse images, or of trimming the image data to obtain only necessary portions.

The cleaning control part is configured to control the operation of the cleaning unit 22. In the present embodiment, the cleaning control part controls the driving of the electric blower 35, the brush motor and the side brush motors, that is, respectively and individually controls the current-carrying quantities of the electric blower 35, the brush motor and the side brush motors, thereby controlling the driving of the electric blower 35, the rotary brush 36 and the side brushes 38.

A non-volatile memory, for example, flash memory is used as the memory. The memory stores not only the map data generated by the image processor 63, but also the area subjected to the traveling or the area subjected to the cleaning in the map data.

The battery is configured to supply electric power to the cleaning unit 22, the sensor part 23, the image capturing part 24, the communication part 25, the input/output part 26, the control unit 27 and the like. In the present embodiment, for example, a rechargeable secondary battery is used as the battery. Accordingly, in the present embodiment, a charging terminal 71 for charging the battery is exposed and disposed at, for example, the lower portion of the main casing 20.

The charging device serves as a base station where the vacuum cleaner 11 returns when finishing the traveling or the cleaning. The charging device may incorporate a charging circuit, for example, a constant current circuit. The charging device further includes a terminal for charging to be used for charging the battery. The terminal for charging is electrically connected to the charging circuit. The terminal for charging is configured to be mechanically and electrically connected to the charging terminal 71 of the vacuum cleaner 11 when returning to the charging device.

The operation of the one above-described embodiment is described next.

The outline of the cleaning by the vacuum cleaner 11 from the start to the end is described first. As the start of the cleaning, the vacuum cleaner 11 cleans a floor surface while traveling on the basis of the map data stored in the memory, and updates the map data as needed. After completing the cleaning, the vacuum cleaner 11 returns to, for example, the charging device, and thereafter is switched over to the work for charging the battery.

The above-described control is more specifically described below. The control unit 27 is switched over to the traveling mode so that the vacuum cleaner 11 starts the cleaning, at certain timing, for example, when a preset cleaning start time arrives or when the input/output part 26 receives the control command to start the cleaning transmitted by a remote control or an external device. In the case where the map data of the traveling area is not stored in the memory, the sensor part 23, the cameras 51, the image processor 63 and the like detect an obstacle and the like in the vicinity of the main casing 20 through predetermined operation, whereby the image processor 63 is able to generate the map data, or alternatively the map data is able to be input or read from the outside.

The image processor 63 firstly acquires image data from at least two cameras 51, 51, and performs processing, for example, correction of distortion of the lenses. Herein, in the case where the image data captured by, for example, the cameras 51, 51 is dark, the image processor 63 performs not only contrast adjusting, but also reduction of pixels of image data, and self-position estimation and map generation, that is, trimming only of the range of image required for SLAM processing. The image processor 63 performs the SLAM processing by use of the two pieces of image data in one set which have been subjected to the image processing and correspond to the respective cameras 51, 51, thereby performing the self-position estimation and the map generation. In this case, although each camera 51 outputs an image signal at a constant frame rate, for example, at 30 fps, the SLAM processing performed by the image processor 63 requires less frames, and thus the SLAM processing is performed at, for example, 10 fps, that is, every three frames. Each of the cameras 51, 51 captures each piece of image data while the vacuum cleaner 11 is traveling. Therefore, if the left and right cameras 51, 51 capture image data at different timing, the two pieces of image data are captured at different positions. Accordingly, the left and right cameras 51, 51 preferably capture image data at the same time in order to eliminate any error with respect to a change in time of the image data captured by the cameras 51, 51. The image processor 63 lights the lamp 53 to acquire appropriate images even under a dark traveling area. In the case of the lamp 53 emitting light in, for example, a visible light wavelength region, the lamp 53 may be lit only when a traveling area or captured image data is dark.

Then, the traveling/sensor type CPU 61 generates a traveling route on the basis of the map data.

In a cleaning mode, the cleaning control part makes the cleaning unit 22 operate to clean a floor surface in a traveling area or a cleaning object area, while the traveling/sensor type CPU 61 controls the driving of the motors 33 so that the main casing 20 autonomously travels along a set traveling route. In an example, the electric blower 35, the rotary brush 36 or the side brushes 38 of the cleaning unit 22 driven by the cleaning control part catches and collects dust and dirt from a floor surface into the dust-collecting unit 40 through the suction port 31. During when the vacuum cleaner 11 is autonomously traveling, in the case where the sensor part 23 or the image processor 63 detects an object such as an obstacle in a traveling area not indicated on the map, the sensor part 23 or the image processor 63 acquires the three-dimensional coordinates of the object, and the image processor 63 makes the map data reflect the three-dimensional coordinates, and stores the resultant data in the memory. It is noted that the captured image may be transmitted from the communication part via a network or directly to an external device having an indication function, whereby the external device allows a user to browse the image.

These steps of the processing are described with reference to the explanatory flowchart shown in Fig. 7. With respect to a camera image processing IP to be executed by the image processor 63, first in step S1, the image data captured by the two cameras 51, 51, that is, the captured images G1, G2, are acquired at a predetermined frame rate. In step S2, image processing such as correction of distortion of lenses is executed. Thereafter, in step S3, the distance image GL is generated as distance image data, and in step S4, the SLAM processing is executed on the basis of the distance image data.

With respect to a traveling algorithm TA to be executed by the traveling/sensor type CPU 61, in step S5, the traveling command to make the motors 33 drive is generated so as to make the main casing 20 travel along the traveling route. Then in step S6, an obstacle is to be detected on the basis of, for example, the distance image data. In step S7, the motors 33 are driven to make the main casing 20 travel. In this case, the position of a detected obstacle and the traveling path TR of the main casing 20 are transmitted to the image processor 63 so that the map reflects them.

According to the one embodiment described above, the image data captured simultaneously is acquired from at least two of the plurality of cameras 51 mounted on the main casing 20, and then subjected to the image processing; the self-position is estimated on the basis of the image data subjected to the image processing; and the map of the traveling area in which the main casing 20 travels is generated. Accordingly, since just the mounting of the small-sized cameras 51 enables the estimation of the self-position and the generation of the map, that is, the execution of the SLAM processing, the vacuum cleaner 11 is able to be downsized. As a result, in an example, the vacuum cleaner 11 is able to enter a narrow clearance such as a clearance under a bed or a sofa to perform the cleaning.

The usage of the images captured by the cameras 51 enables to control the traveling with higher precision, compared with the case of the usage of, as traveling information, the rotational speed of the driving wheels 21 or the self-position information acquired from a gyro sensor, as an example.

The images captured by the cameras 51 are also available for the purpose of security, for example, monitoring, or recognition of a person or an object by image recognition.

The image processor 63 acquires the image data captured by at least two cameras 51, 51 at the same time, thereby enabling to reduce an error with respect to a change in time of the image data captured by these cameras 51. Accordingly, even the images captured by the cameras 51 during when the vacuum cleaner 11 is traveling or turning hardly include deviation with respect to the position or the direction of image capturing due to the traveling or turning, resulting in enabling to improve the precision of the SLAM processing based on the image data.

It is noted that the image data captured at the same time may be the image data captured by the plurality of cameras 51 subjected to synchronization, or may be the image data which is allowed to be treated as being captured substantially at the same time by the plurality of cameras 51 not subjected to synchronization. In the case of the plurality of cameras 51 to be subjected to synchronization, the SLAM processing is able to be executed with higher precision. In the case of the plurality of cameras 51 not to be subjected to synchronization, more inexpensive cameras are available as the cameras 51.

The frame rate at which the image processor 63 executes the image processing is set lower than the frame rate at which the image data is acquired from at least two cameras 51, 51, thereby enabling to reduce the load in the image processing by the image processor 63.

Moreover, the camera 51 configured to output an image signal at the frame rate matching the processing speed of the image processor 63 needs not to be selected, whereby the flexibility of selecting the camera 51 is enhanced.

The number of pixels of the image data to be subjected to the image processing by the image processor 63 is less than the number of the image data acquired from at least two cameras 51, 51, thereby enabling to reduce the load in the image processing by the image processor 63.

As a result, a more inexpensive processor is available as the image processor 63.

The image processor 63 has the function of correcting the distortion occurring in the image data due to the lenses of the cameras 51, 51, thereby improving the precision of the SLAM processing. Especially, the camera 51 according to the present embodiment has a wide angle lens, and thus distortion occurs in the image data. The correction of the distortion enables to perform the SLAM processing with higher precision.

Furthermore, in the case of each of the cameras 51, 51 capable of capturing an image in a visible light wavelength region, the lamp 53 configured to output light including the visible light wavelength region is included, thereby enabling to acquire the image data having appropriate brightness even in the case where the traveling area subjected to the image capturing is dark.

The lamp 53 is lit in the case where the brightness in the traveling area is equal to or lower than a predetermined level, thereby enabling to reduce the unnecessary lighting sate of the lamp 53, resulting in reducing power consumption.

In the case of each of the cameras 51, 51 capable of capturing an image in an infrared region, the lamp 53 configured to output light including the infrared region is included, thereby enabling to acquire appropriate image data.

The image processor 63 has the function of contrast adjusting of image data, thereby enabling to improve the precision of the SLAM processing even in the case where the captured image is dark, as an example.

The image processor 63 has the function of generating the distance image data through calculation of the depth of an object in the image data, thereby enabling to detect an obstacle on the basis of the distance image data. The SLAM processing and the obstacle detection are thus enabled to be executed in combination, thereby enabling to control the traveling more stably. Accordingly, the sensor part 23 does not require, for example, dedicated obstacle detection means configured to detect an obstacle, thereby enabling to provide a smaller-sized and more inexpensive vacuum cleaner 11. Alternatively, dedicated obstacle detection means is used in combination, thereby enabling to improve the precision in obstacle detection.

The image processor 63 estimates the self-position on the basis of the data of a predetermined distance range in the distance image data, and generates the map of the traveling area on the basis of the data of the predetermined distance range in the distance image data, thereby enabling to execute processing with higher precision.

It is noted that in the one embodiment described above, the image processor 63 may be configured without the depth calculation means to generate distance image data through calculation of the depth of an object in the image data. In other words, the depth calculation means is not an essential component.

In the description above, the image processor 63 is configured to integrally have the functions of the image input means, the image processing means, the self-position estimation means, the map generation means and the depth calculation means. Alternatively, individual processing parts may be configured respectively to have these functions, or a processing part may be configured to integrally have some of the plurality of functions.

In the description above, the camera 51 is configured to capture moving video at a predetermined frame rate. Alternatively, the camera 51 may be configured to capture only a still image at necessary timing.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.
(1) A control method of a vacuum cleaner, the control method including the steps of acquiring image data from at least two cameras out of a plurality of cameras, performing image processing to the image data, estimating a self-position on the basis of the image data subjected to the image processing, and generating a map of a traveling area for traveling on the basis of the image data subjected to the image processing.
(2) The control method of the vacuum cleaner according to (1), the control method of the vacuum cleaner including the step of acquiring the image data simultaneously captured by at least the two cameras.
(3) The control method of the vacuum cleaner according to (1), wherein a frame rate of the image processing is lower than a frame rate of the image data acquired from at least the two cameras.
(4) The control method of the vacuum cleaner according to (1), wherein a number of pixels of the image data to be subjected to the image processing is less than a number of pixels of the image data acquired from at least the two cameras.
(5) The control method of the vacuum cleaner according to (1), the control method including the step of performing the image processing by correcting distortion occurring in the image data due to a lens included in the cameras.
(6) The control method of the vacuum cleaner according to (1), the control method including the step of, when each of the cameras captures an image in a visible light wavelength region, outputting light including the visible light wavelength region.
(7) The control method of the vacuum cleaner according to (1), the control method including the step of, when each of the cameras captures an image in a visible light wavelength region, outputting light including the visible light wavelength region in the case where brightness in the traveling area is equal to or lower than a predetermined level.
(8) The control method of the vacuum cleaner according to (1), the control method including the step of, when the cameras capture an image in an infrared region, outputting light including the infrared region.
(9) The control method of the vacuum cleaner according to (1), the control method including the step of adjusting contrast of the acquired image data.
(10) The control method of the vacuum cleaner according to (1), the control method including the step of generating distance image data through calculation of depth of an object in the image data.
(11) The control method of the vacuum cleaner according to (10), the control method including the steps of estimating the self-position on the basis of data of a predetermined distance range in the distance image data, and generating the map of the traveling area on the basis of the data of the predetermined distance range in the distance image data.

## Claims

1. A vacuum cleaner comprising:
a main body capable of traveling;
travel control means configured to control traveling of the main body;
a plurality of cameras mounted on the main body;
image input means configured to acquire image data from at least two cameras out of the cameras;
image processing means configured to perform image processing to the image data acquired by the image input means;
self-position estimation means configured to estimate a self-position on a basis of the image data subjected to the image processing by the image processing means; and
map generation means configured to generate a map of a traveling area where the main body travels, on the basis of the image data subjected to the image processing by the image processing means.

2. The vacuum cleaner according to claim 1, wherein
the image input means acquires the image data simultaneously captured by at least the two cameras.

3. The vacuum cleaner according to claim 1 or 2, wherein
a frame rate of the image processing performed by the image processing means is lower than a frame rate of the image data acquired from at least the two cameras by the image input means.

4. The vacuum cleaner according to any one of claims 1 to 3, wherein
a number of pixels of the image data to be subjected to the image processing by the image processing means is less than a number of pixels of the image data acquired from at least the two cameras by the image input means.

5. The vacuum cleaner according to any one of claims 1 to 4, wherein
each of the cameras includes a lens, and
the image processing means has a function of correcting distortion occurring in the image data due to the lens of the camera.

6. The vacuum cleaner according to any one of claims 1 to 5, wherein
each of the cameras is able to capture an image in a visible light wavelength region, and
the vacuum cleaner comprises illumination means configured to output light including the visible light wavelength region.

7. The vacuum cleaner according to any one of claims 1 to 6, wherein
the illumination means is lit when brightness in the traveling area is equal to or lower than a predetermined level.

8. The vacuum cleaner according to any one of claims 1 to 5, wherein
the cameras are able to capture an image in an infrared region, and
the vacuum cleaner comprises illumination means configured to output light including the infrared region.

9. The vacuum cleaner according to any one of claims 1 to 8, wherein
the image processing means has a function of adjusting contrast of the image data.

10. The vacuum cleaner according to any one of claims 1 to 9, the vacuum cleaner comprising:
depth calculation means configured to generate distance image data through calculation of depth of an object in the image data.

11. The vacuum cleaner according to claim 10, wherein
the self-position estimation means estimates the self-position on a basis of data of a predetermined distance range in the distance image data, and
the map generation means generates the map of the traveling area on the basis of the data of the predetermined distance range in the distance image data.
